# EUROPEAN PATENT APPLICATION

(11) **EP 2 395 470 A1**
(43) Date of publication of application: **14.12.2011**
(21) Application number: 11250585.4
(22) Date of filing: 08.06.2011
(51) Int. Cl.: G06Q 40/00

(54) **Account prediction tools**

(30) Priority: 09.06.2010 US 797096
(71) Applicant: FMR LLC, Boston MA 02109 (US)
(72) Inventor: McDonough, John, Nahant, MA 01908 (US); Grundner, James, Cary, NC 27519 (US); Martin, David Corrie, Natick, MA 01760 (US)
(74) Representative: Charig, Raymond Julian

(57) **Abstract**

A computer-implemented method is described for detecting a change in one or more attributes associated with a consumer of financial services, and generating, based at least in part on the detected change, a prediction that the consumer of financial services is likely to initiate an action with regard to one or more financial accounts associated with the consumer.

## Description

### BACKGROUND

Predictive modeling is the process by which a model is generated to predict the probability of an outcome. In many cases, the model is generated to predict the probability of an outcome given a set amount of input data. For example, given an email message, a predictive model determines the probability that the email is an unsolicited, commercial email message (e.g., a "spam" message).

### SUMMARY

In one aspect of the present disclosure, a computer-implemented method detects by one or more computer systems a change in one or more attributes associated with a consumer of financial services, the attributes including financial account attributes associated with an account of the consumer and personal attributes associated with a profile of personal attributes of the consumer; and generates by the one or more computer systems, based at least in part on the detected change, a prediction that the consumer of financial services is likely to initiate an action with regard to one or more financial accounts associated with the consumer.

Implementations of the disclosure may include one or more of the following features. In some implementations, the method further comprises: causing the one more computer systems to apply one or more predictive rules to the one or more of the attributes associated with the consumer of financial services; and calculating a probability value for a consumer initiated action with regard to the financial account. The method also comprises retrieving by the one or more computer systems a threshold value; determining that a value of the prediction exceeds the threshold value; and generating based on the determination the prediction that the action is likely to be initiated by the consumer. The method additionally comprises generating by the one or more computer systems a report comprising a name of the consumer likely to initiate the action with regard to the financial account; and sending by the one or more computer systems the report to one or more representatives of a financial institution associated with the financial account.

In other implementations, the method further comprises generating, by the one or more computer systems based on the predicted action, text for one or more representatives of a financial institution associated with the financial account to use in a dialog with the consumer; and generating by the one or more computer systems a graphical user interface that when rendered on a display device renders a visual representation of the text. The method also comprises generating by the one or more computer systems a recommendation based on the predicted action the consumer is likely to initiate. The method additionally comprises generating by the one or more computer systems a recommendation for a financial product based on the predicted action the consumer is likely to initiate.

In still other implementations, the action comprises one or more of an account transfer out of a financial institution associated with the financial account, an account transfer into the financial institution, and a withdrawal from the financial account at the financial institution. The method also comprises receiving from a representative of a financial institution associated with the one or more financial accounts a message indicating an actual action initiated by the consumer; and comparing a first value associated with the actual action to a second value associated with the predicted action. The method further comprises generating by the one or more computer systems based on the comparing a score for the predicted action; and causing by the one of more computer systems one or more predictive rules to be updated based on the generated score.

In another aspect of the disclosure, one or more machine-readable media are configured to store instructions that are executable by one or more processing devices to perform functions comprising: detecting a change in one or more attributes associated with a consumer of financial services, the attributes including financial account attributes associated with an account of the consumer and personal attributes associated with a profile of personal attributes of the consumer; and generating, based at least in part on the detected change, a prediction that the consumer of financial services is likely to initiate an action with regard to one or more financial accounts associated with the consumer. Implementations of this aspect of the present disclosure can include one or more of the foregoing features.

In still another aspect of the disclosure, an apparatus comprises one or more processing devices; and one or more machine-readable media configured to store instructions that are executable by the one or more processing devices to perform functions comprising: detecting a change in one or more attributes associated with a consumer of financial services, the attributes including financial account attributes associated with an account of the consumer and personal attributes associated with a profile of personal attributes of the consumer; and generating, based at least in part on the detected change, a prediction that the consumer of financial services is likely to initiate an action with regard to one or more financial accounts associated with the consumer. Implementations of this aspect of the present disclosure can include one or more of the foregoing features.

### DESCRIPTION OF DRAWINGS

FIG. 1 is a block diagram of an account prediction system.
FIGS. 2-3 are flowcharts of processes used by the account prediction system.
FIGS. 4-5 are screen images of graphical user interfaces generated by the account prediction system.

### DETAILED DESCRIPTION

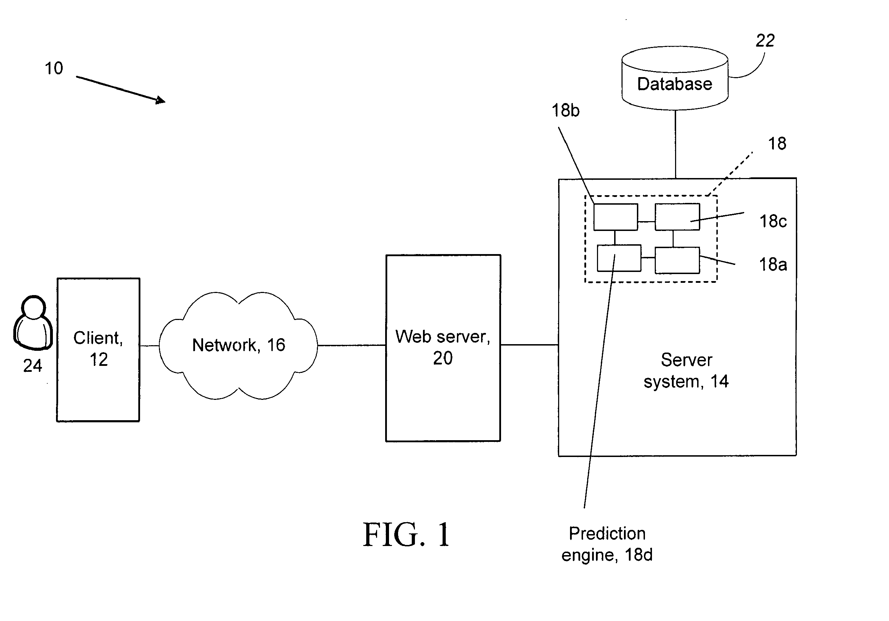

Referring to FIG. 1, a system 10 for predicting a movement of funds in a financial institution includes a client system 12 that accesses a server system 14. The client system 12 includes a processor, memory and a storage device, e.g., a client workstation or personal computer (all not shown) that can include a client process to receive account predictions of movement of funds in a financial institution. Client system 12 includes any combination of, e.g., personal digital assistants, land-line telephones, cell phones, mobile devices, computer systems, media-player-type devices, and so forth. The client system 12 is connected to the server system 14 through a network 16 (e.g., the Internet, a wide area network ("WAN") network, a Internet Protocol (IP) network, and a non-IP network).

The server system 14 is comprised of one or preferably a plurality of server computers generally denoted as 18. Each server computer includes a processor 18a, main memory 18b and storage 18c. The server system 14 also includes a prediction engine 18d. The prediction engine 18d (embodied as software in this exemplary implementation) generates a prediction regarding an amount of funds to be moved into or out of an account at a financial institution. The sever system 14 operates as a service running on a web server 20. The components of the sever system 14 and the web server 20 are integrated and/or distributed in various arrangements.

The server system 14 accesses one or more databases 22 that store information pertaining to a consumer's financial accounts (e.g., account numbers, account balances, account types, maturity dates, historical transactions, and so forth) and demographic information associated with the consumer (e.g., gender, age, retirement status, and employment status).

A user (e.g., a representative of a financial institution, a consumer service representative, an account manager and so forth) at a client system 12 connects to the system 14 through a website or other interface on the web server 20. The client system 12 enables the user to input information into the system 14 and receive information (e.g., account prediction information) from the system 14.

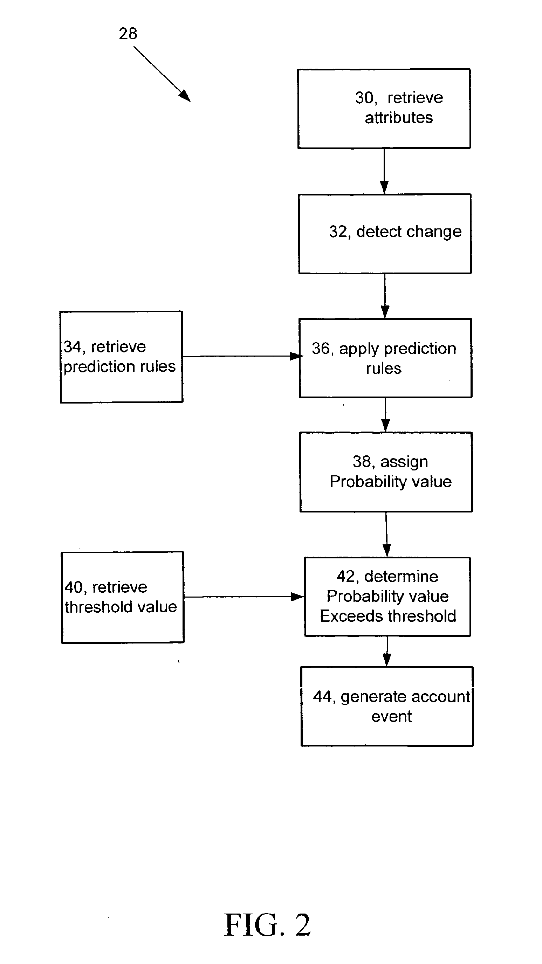

Referring to FIG. 2, the system 14 generates 28 account prediction information, for example through use of an account prediction model, as follows. The system 14 has stored in a database, historical data for attributes ("attribute values") associated with a customer, e.g. owner of an account, at the financial institution. The system 14 retrieves 30, e.g., from database 22 (which can be located locally, remotely, at a financial institution, at third party site, and can include several different databases), historical and current data including values for attributes ("attribute values") associated with a customer, e.g. owner of an account at the financial institution. Attributes of the customer include for instance, demographic information, investment portfolio information (e.g., 40 1 k information, investment retirement account ("IRA") information, brokerage information, and so forth), aggregated financial account data (e.g., current, real-time information received from online money management tools used by financial consultants, etc. to acquire, attract, and retain customers. Such tools enable access via a common infrastructure to provide data from various sources for various account types. One such example of these online money management tools is Yodlee® MoneyCenter™ Yodlee Inc. 3600 Bridge Parkway, Suite 200 Redwood City, CA 94065). Attributes of the customer also include lifetime position information and lifetime changes information (e.g., information regarding marital status, family history, a birth of a child, investment velocity, credit cards and loans issued in the consumer's name), and spending habit information. Based on the retrieved attributes, the system detects 32 changes in one or more of the attribute values associated with the consumer by comparing the retrieved attributes values to the historical attribute values for the customer.

The system 14 retrieves 34 account prediction rules from an account prediction rules storage device, such as the database 22 or other data repository. The detected changes in the consumer's attribute values are applied to account prediction rules to generate a prediction of the likelihood of that the consumer will withdraw funds from or to add funds to a financial account. For example, the account prediction rules include instructions that when executed by the system 14 generate a prediction regarding whether a consumer is likely to open an account (e.g., open a new account, rollover an investment account, 401k account, and/or a brokerage account from one financial institution to another financial institution, and so forth). The account prediction rules also include instructions that when executed by the system 14 generate a prediction regarding whether a consumer is likely to close a financial account and/or withdraw funds from an account at a financial institution.

The system 14 applies 36 the account prediction rules and assigns 38 a probability value of an occurrence of an account action (e.g., opening a financial account, transferring funds from a financial account, transferring funds into a financial account and so forth.) The system 14 retrieves 40 a threshold value for the account action, for example, from the database 22. The system 14 determines 42 that the probability value of the occurrence of the account action exceeds the threshold value of the account action and generates a "predicted action" including information indicative of the account action. The system 14 generates 44 an action alert to notify a representative of the predicted action.

In one particular example, on May 15, 2010, the system 14 retrieves 30 a marital status attribute value of "married" for a consumer. The system 14 detects 32 a change in the consumer's marital status by querying the database 22 for an earlier value of the consumer's marital status attribute- the consumer's marital status attribute on, e.g., May 15, 2009. The system 14 receives a marital status attribute value of "single" for that attribute value on May 15, 2009. By comparing the marital status attribute value of "single" to the marital status attribute value of "married," the system detects 32 a change in the consumer's marital status.

The system retrieves 34 and applies 36 an account prediction rule that includes the following instructions: when a consumer's marital status changes from "single" to "married," the probability of the consumer opening a new account with the financial institution is 50%. Based on this account prediction rule, the system 14 assigns a probability value of 50% to the consumer opening a new account at a financial institution. The system retrieves 40 a threshold value that is preset by the institution for this type of rule, and which specifies in this example a minimum threshold, e.g. 25%, to raise an account action alert for signaling a customer representative that the customer is likely to open a new account at some financial institution. The system 14 determines that in this example the 50% probability value from execution of the rule exceeds the 25% threshold value and generates 44 an account alert to notify the representative of the likelihood of the consumer opening a new account at the financial institution.

Conversely, had the rule engine executed a rule that resulted in a probability that was below the threshold probability value the rule engine would not generate an account alert.

More complicated rules can use several different attribute values of a customer, which are applied to a more complicated model to generate a prediction of the customer initiating a predefined action, e.g., opening an account, closing an account or a rollover from one account to another account. In such more complicated rules the model calculates a probability value rather than the probability value being defined as part of the rule. This value is again compared to a threshold value to determine whether an alert should or should not be sent to a customer representative and so forth.

Additionally, some rules generate an account alert upon the detection of a change in the consumer's attribute values. For example, a rule specifies that when a customer reaches the age of 70 years old, an account alert is generated to notify customer representatives that the customer can start making withdrawals and distributions from retirement accounts.

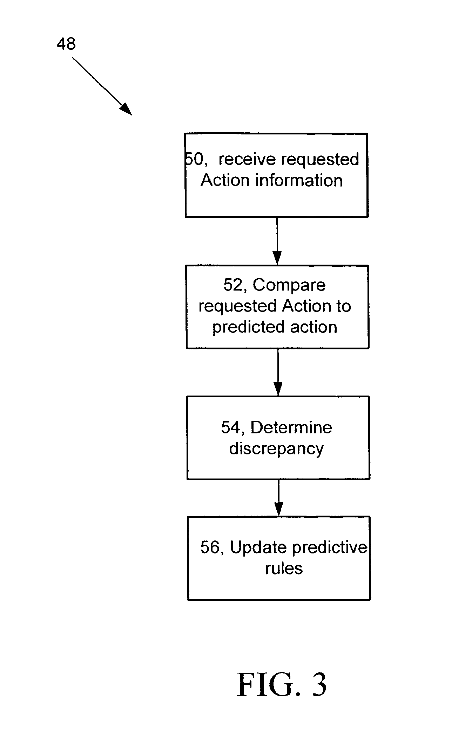

Referring to FIG. 3, the system 14 trains 48 an account prediction model as follows. The system 14 receives 50 information indicating an action (e.g., opening or closing of a financial account) that a consumer has request be performed (a "request action"), for example, after the consumer has spoken with a representative of the financial institution. The system 14 compares the requested action to the predicted action generated 44 by the system. The system 14 determines 54 a discrepancy between the requested action and the predicted action. For example, the requested action includes information indicative of a consumer's request to open an account. The predicted action includes information indicative of a consumer's request to close an account. In this case, a discrepancy exists between the actual action and the predicted action. Based on the determined discrepancy, the system 14 uses heuristic algorithms to learn new values for the probability of occurrences of account actions and associated threshold values. The system 14 updates 56 the account prediction rules based on the learned, new values.

In some examples, the account prediction rules are associated with a counter. A value of "+1" is added to the value of the counter when the system determines that the rule's predicted action is correct. A value of "-1" is subtracted from the value of the counter when the system determines that the rule's predicted action is incorrect. When the value of the counter reaches a threshold value, the prediction rule is "flagged" for manual review, for example, by a customer service representative or another employee of the financial institution.

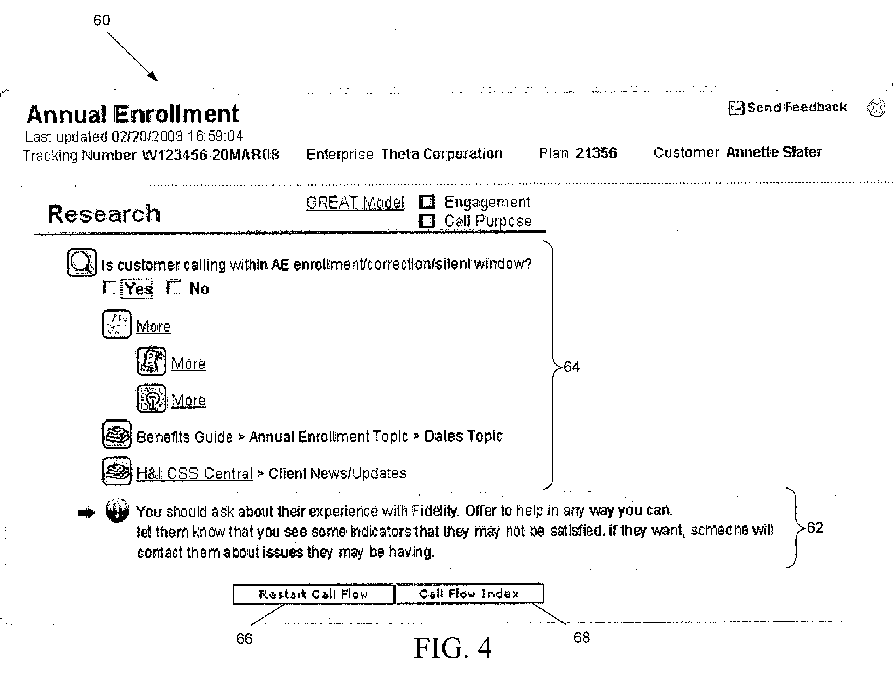

Referring to FIG. 4, the system 14 generates a graphical user interface 60. In this example, the graphical user interface includes a region that depicts a visual representation 64 of a status (e.g., enrollment status) of the consumer's account and also includes a region that depicts a visual representation 62 of a generated account alert. The generated account alert in this instance is generated from execution of a rule that examines the user's attribute values and based on the execution generates the account alert, which indicated that the consumer may not be satisfied with the financial institution. The visual representation 62 of the account alert is juxtaposed the visual representation 64 of the account status.

Graphical user interface 60 includes link 66, selection of which causes the system 14 generate 28 (FIG. 2) account prediction information. Graphical user interface 60 also includes link 68, selection of which causes the system 14 to generate a call flow index (e.g., a series of greetings or phrases for a customer service representative to provide to a customer)..

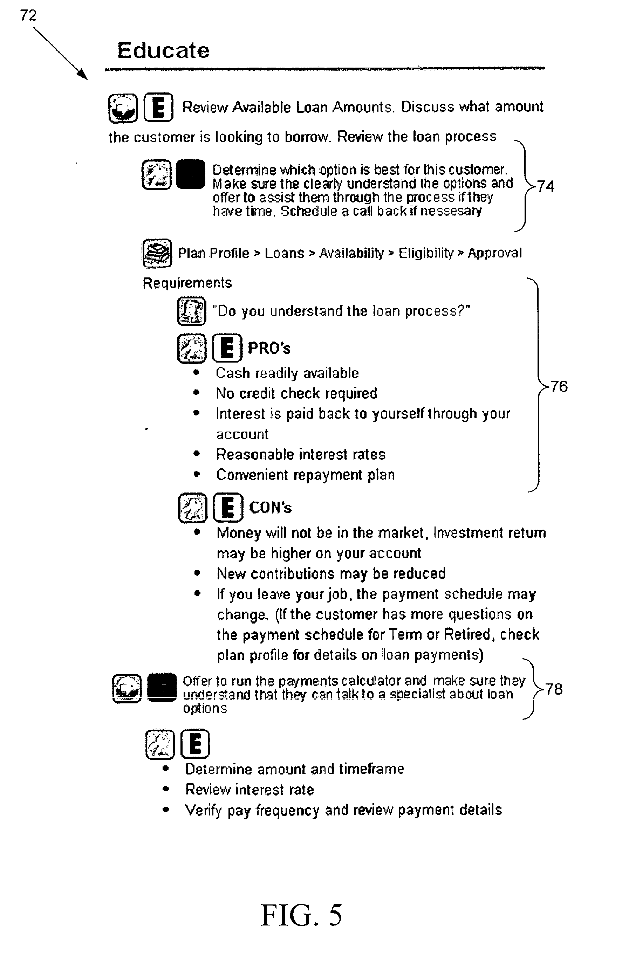

Referring to FIG. 5, the system 14 generates a graphical user interface 72 that when rendered on a display device renders visual representations 74, 76, 78 of account alerts including topics for a representative to address with a consumer.

### Additional exemplary rules

Through execution of appropriate rules by the rules engine, the system 14 detects that a consumer requested to make a loan (e.g., through the retrieval of a "loan" attribute), the loan process failed, the consumer called the financial institution several times and feels unsatisfied that the loan process is working. The system generates 44 (FIG. 2) predicted account actions based on these detected attributes. Visual representation 74 includes text indicating that the representative should determine the loan option that is most appropriate for the consumer. Visual representation 76 includes text indicating "pros" and "cons" of the loan process for the representative to explain to the consumer. Visual representation 78 includes text indicating the representative should explain to the consumer the option of consulting with a loan specialist.

In another example, a consumer calls into a call center 14. Execution of a rule by the system 14 detects changes in the consumer's attribute values (e.g., a departure from an employer, a job loss, attainment of retirement age, and so forth). The system 14 generates a graphical user interface that when rendered on a display device renders for the representative, text that indicates that the consumer is likely to be taking an action (e.g., withdrawal of funds from a financial account, initiating a rollover of funds from a financial account, and so forth). Based on the predicted action, the system generates a plan for how the predicted action may be efficiently implemented to maximize income and minimize tax consequences. The plan is in the form of instructions (additional questions, suggested transactions, indications of potential tax consequences, etc.) that are sent to the representative and which are used by the representative to assist the consumer during the call into the call center.

In another implementation, the system 14 runs in a "batch mode," in which the system 14 generates a report (e.g., a daily report) of "high value" consumers in a position to make a withdrawal from a financial account, move funds into a financial account, roll money out of a 401 k plan at another financial institution, and so forth. The system 14 sends the report to representatives (e.g., call center representatives). The system 14 uses calling system software to dial out bound calls to the high value consumers and establish a telephonic connection between the representatives and the high value targets. Using the techniques described herein, the system 14 generates 44 an account alert including text (e.g., "Hi, this is your Fidelity representative calling, I wanted to speak to you today about potential financial planning we can offer you as you are about to reach retirement") for the representative to use during the interaction with the consumer.

In still another implementation, a consumer accesses through the web server 20 (FIG. 1) a graphical user interface including visual representations of financial planning tools. As the consumer progresses through the planning tools, the system 14 generates 44 account alerts that propose solutions to the consumer for various predicted actions. The account alerts include text to notify a consumer of financial advantages of moving the consumer's funds between financial institutions. For example, the text can include a greeting such as "We see you have $400,000 in certificates of deposit at ABC financial institution. We can offer a higher return if you move these funds to XYZ financial institution."

In still another example, the system 44 predicts, based upon the data (e.g., loan & credit card balances, ages of children, balances from education savings plans (i.e., 529 plans), and so forth) in the database 22, that the customer is short on funds and may try to take a loan or withdrawal. In one particular example, a customer has three children that under the age of nineteen, has exhausted his 529 plans, has high credit card balances, and has a loan available in a retirement account (IRA, 401k plan, and so forth). In this example, the system determines that the customer rarely calls the financial institution and predicts, that when the customer does call, that he is likely calling about a loan.

In another example, the system 14 determines, based on payroll indicator information stored in the database 22 and/or a manual entry of information by a customer service representative, that a customer's employment has been terminated, for example, due to layoffs at the customer's company. In this example, the customer's termination is a "leading indicator" (e.g., a life event indicative of a reason why the customer is calling the financial institution). The system 14 predicts that the customer is calling to withdraw the customer's retirement account. Based on the real-time prediction, the system 14 routes an inbound call from the customer to a customer service representative that specialized in retaining accounts at the financial institution.

In yet another example, if the customer has a history of long wait times the system predicts that the customer is unsatisfied with the customer service level, the system moves the customer's call to a higher priority in the wait queue and also generates messages that stress points for the customer prior to an interaction with a phone associate.

Embodiments can be implemented in digital electronic circuitry, or in computer hardware, firmware, software, or in combinations thereof. Apparatus of the invention can be implemented in a computer program product tangibly embodied or stored in a machine-readable storage device for execution by a programmable processor; and method actions can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object oriented programming language, or in assembly or machine language if desired; and in any case, the language can be a compiled or interpreted language.

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. Computer readable media for embodying computer program instructions and data include all forms of non-volatile memory, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in special purpose logic circuitry. Any of the foregoing can be supplemented by, or incorporated in, ASICs (application-specific integrated circuits).

To provide for interaction with a user, embodiments can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments can be implemented in a computing system that includes a back end component, e.g., as a data server, or that includes a middleware component, e.g., an application server, or that includes a front end component, e.g., a client computer having a graphical user interface or a Web browser through which a user can interact with an implementation of embodiments, or any combination of such back end, middleware, or front end components. The components of the system can be interconnected by any form or medium of digital data communication, e.g., a communication network. Examples of communication networks include a local area network (LAN) and a wide area network (WAN), e.g., the Internet.

The system and method use the "World Wide Web" (Web or WWW), which is that collection of servers on the Internet that utilize the Hypertext Transfer Protocol (HTTP). HTTP is a known application protocol that provides users access to resources, which may be information in different formats such as text, graphics, images, sound, video, Hypertext Markup Language (HTML), as well as programs. Upon specification of a link by the user, the client computer makes a TCP/IP request to a Web server and receives information, which may be another Web page that is formatted according to HTML. Users can also access other pages on the same or other servers by following instructions on the screen, entering certain data, or clicking on selected icons. It should also be noted that any type of selection device known to those skilled in the art, such as check boxes, drop-down boxes, and the like, may be used for embodiments using web pages to allow a user to select options for a given component. Servers run on a variety of platforms, including UNIX machines, although other platforms, such as Windows 2000/2003, Windows NT, Sun, Linux, and Macintosh may also be used. Computer users can view information available on servers or networks on the Web through the use of browsing software, such as Netscape Navigator, Microsoft Internet Explorer, Mosaic, or Lynx browsers. The computing system can include clients and servers. A client and server are generally remote from each other and typically interact through a communication network. The relationship of client and server arises by virtue of computer programs running on the respective computers and having a client-server relationship to each other.

Other embodiments are within the scope and spirit of the description and the claims. For example, due to the nature of software, functions described above can be implemented using software, hardware or firmware or combinations thereof. Features implementing functions may also be physically located at various positions, including being distributed such that portions of functions are implemented at different physical locations. It will be understood that various modifications may be made without departing from the spirit and scope of the application.

## Claims

1. A computer-implemented method comprising:
detecting by one or more computer systems a change in one or more attributes associated with a consumer of financial services, the attributes including financial account attributes associated with an account of the consumer and personal attributes associated with a profile of personal attributes of the consumer; and
generating by the one or more computer systems, based at least in part on the detected change, a prediction that the consumer of financial services is likely to initiate an action with regard to one or more financial accounts associated with the consumer.

2. The computer-implemented method of claim 1 wherein detecting further comprises:
causing the one more computer systems to apply one or more predictive rules to the one or more of the attributes associated with the consumer of financial services; and
calculating a probability value for a consumer initiated action with regard to the financial account.

3. The computer-implemented method of claim 1 wherein generating further comprises:
retrieving by the one or more computer systems a threshold value;
determining that a value of the prediction exceeds the threshold value; and
generating based on the determination the prediction that the action is likely to be initiated by the consumer.

4. The computer-implemented method of claim 1 further comprising:
generating by the one or more computer systems a report comprising a name of the consumer likely to initiate the action with regard to the financial account; and
sending by the one or more computer systems the report to one or more representatives of a financial institution associated with the financial account.

5. The computer-implemented method of claim 1 further comprising:
generating, by the one or more computer systems based on the predicted action, text for one or more representatives of a financial institution associated with the financial account to use in a dialog with the consumer; and
generating by the one or more computer systems a graphical user interface that when rendered on a display device renders a visual representation of the text.

6. The computer-implemented method of claim 1 further comprising:
generating by the one or more computer systems a recommendation based on the predicted action the consumer is likely to initiate.

7. The computer-implemented method of claim 1 further comprising:
generating by the one or more computer systems a recommendation for a financial product based on the predicted action the consumer is likely to initiate.

8. The computer-implemented method of claim 1 wherein the action comprises one or more of an account transfer out of a financial institution associated with the financial account, an account transfer into the financial institution, and a withdrawal from the financial account at the financial institution.

9. The computer-implement method of claim 1 further comprising:
receiving from a representative of a financial institution associated with the one or more financial accounts a message indicating an actual action initiated by the consumer; and
comparing a first value associated with the actual action to a second value associated with the predicted action.

10. The computer-implement method of claim 9 further comprising:
generating by the one or more computer systems based on the comparing a score for the predicted action; and
causing by the one of more computer systems one or more predictive rules to be updated based on the generated score.

11. One or more machine-readable media configured to store instructions that are executable by one or more processing devices to perform the steps of any of claims 1 to 10.

12. An apparatus comprising:
one or more processing devices; and
one or more machine-readable media configured to store instructions that are executable by the one or more processing devices to perform the steps of any of claims 1 to 10.
